# EUROPÄISCHE PATENTSCHRIFT

(11) **EP 3 724 051 B1**
(45) Veröffentlichungstag und Bekanntmachung des Hinweises auf die Patenterteilung: **07.02.2024**
(21) Anmeldenummer: 18836351.9
(22) Anmeldetag: 04.12.2018
(51) Int. Cl.: B60T 17/00

(54) **LUFTANORDNUNG FÜR EIN NUTZFAHRZEUG**
AIR SUPPLY DEVICE FOR A COMMERCIAL VEHICLE
DISPOSITIF D'ADMISSION D'AIR POUR UN VÉHICULE UTILITAIRE

(30) Priorität: 14.12.2017 DE 102017129908
(43) Veröffentlichungstag der Anmeldung: 21.10.2020
(73) Patentinhaber: KNORR-BREMSE Systeme für Nutzfahrzeuge GmbH, 80809 München (DE)
(72) Erfinder: SCHNITTGER, Karsten, 80935 München (DE); KUHLEN, Christian, 85609 Aschheim (DE); GRIESSER, Fabian, 80803 München (DE); LEINUNG, Andreas, 81245 München (DE)
(86) Internationale Anmeldenummer: PCT/EP2018/083518
(87) Internationale Veröffentlichungsnummer: WO 2019/115295

(56) Entgegenhaltungen:
- EP-A1- 3 121 078
- EP-A2- 2 039 576
- EP-A2- 2 829 744
- DE-A1- 10 357 763
- DE-A1- 19 620 851
- DE-A1-102005 057 003

## Beschreibung

Die vorliegende Erfindung betrifft eine Anordnung, insbesondere eine Anordnung für ein Nutzfahrzeug mit wenigstens einer Lufttrocknereinheit und einer Regelungseinheit.

In Bremssystemen für Lastkraftwagen werden Luftaufbereitungskomponenten eingesetzt, die im Wesentlichen die zwei Hauptfunktionalitäten Lufttrocknung und Kreisabsicherung haben bzw. Regelung der Lufttrocknung.

Die Lufttrocknereinheit weist dabei im Regelfall eine Lufttrocknerpatrone, ein Ablassventil, eine Heizung und ein Verbraucherrückschlagventil auf.

Aus dem Stand der Technik bekannte Systeme sind beispielsweise in der EP 2 829 744 A2 oder der DE 10357763 A1, der DE 19620851 A1 und der EP 2 039 576 A2 bekannt.

Die Aufgabe der vorliegenden Erfindung, eine Anordnung der eingangs genannten Art in vorteilhafter Weise weiterzubilden, insbesondere dahingehend, dass die Hauptfunktionalitäten von Luftaufbereitungskomponenten, nämlich Lufttrocknung und Kreisabsicherung in separaten Gehäusen und Einheiten untergebracht werden können, um eine räumlich getrennte Anbindung der Gehäuse zu erlauben.

Diese Aufgabe wird erfindungsgemäß gelöst durch eine Anordnung mit den Merkmalen des Anspruchs 1. Danach ist vorgesehen, dass eine Anordnung, insbesondere Anordnung für ein Nutzfahrzeug, mit wenigstens einer Luftrocknereinheit und mit einer Regelungseinheit, wobei die Lufttrocknereinheit und die Regelungseinheit jeweils als gesonderte Einheiten ausgebildet sind, wobei die Lufttrocknereinheit wenigstens eine Lufttrocknerkartusche, wenigstens ein Ablassventil und wenigstens eine Steuerleitung zur pneumatischen Ansteuerung des Ablassventils aufweist, wobei in der Lufttrocknereinheit anschließend an die Lufttrocknerkartusche wenigstens eine Verbindungsleitung vorgesehen ist, die direkt zu einem außerhalb der Lufttrocknereinheit befindlichen Verbraucherrückschlagventil für die Lufttrocknereinheit führt, wobei die Verbindungsleitung zumindest teilweise bi-direktional nutzbar ist und/oder an einen bi-direktional nutzbaren Leitungsabschnitt anschließbar oder angeschlossen ist.

Die Erfindung basiert auf dem Grundgedanken, die Lufttrocknereinheit separat und einfacher aufzubauen und somit die Lufttrocknereinheit räumlich getrennt von der anderen Gehäusekomponente mit der Regelungseinheit verbauen zu können. Dabei wird die Lufttrocknereinheit einerseits mit ihrer Lufttrocknungsfunktion entsprechend beibehalten, gleichzeitig wird aber eine Regenerierung ermöglicht. Durch die Verbindungsleitung, die direkt und ungedrosselt zu einer außerhalb der Lufttrocknereinheit befindlichen Verbraucherrückschlagventilen führt, wird erreicht, dass die Lufttrocknereinheit insgesamt einfacher aufgebaut werden kann.

Weiter ist vorgesehen, dass die Verbindungsleitung bi-direktional verwendbar ist,

Die Verbindungsleitung ode rein bi-direktional nutzbarer Leitungsabschnitt kann eine bi-direktional nutzbare Leitung sein. Insbesondere kann die Bi-Direktionalität darin bestehen, dass in einer Strömungsrichtung die Leitung als Versorgungsleitung zur Druckversorgung von Verbrauchern dient, die in dieser Strömungsrichtung (d.h. vom Krompressor kommend durch die Lufttrocknereinheit hindurch) stromabwärts der Lufttrocknereinheit angeordnet sind. Die andere Strömungsrichtung wird dann genutzt, um die Lufttrocknereinheit in der anderen Richtung zur Regeneration zu durchströmen.

Insbesondere in einem ersten Betriebszustand in einer ersten Richtung durchströmbar ist und in einem zweiten Betriebszustand in einer zweiten der ersten Richtung entgegengesetzten Richtung durchströmbar ist.

Der erste Betriebszustand ist dabei beispielsweise der normale Betriebszustand, bei dem die Lufttrocknereinheit zum Trocknen der bereitgestellten Druckluft verwendet wird. Der zweite Betriebszustand ist in diesem Falle dann die Regenerierung, bei der die Trockenmittelpatrone entsprechend regeneriert und entgegengesetzt zum ersten Betriebszustand durchströmt wird.

Somit kann in einem ersten Gehäuse die Funktion Lufttrocknung mit der Lufttrocknerpatrone in üblicher Form vorgesehen sein. Mit der Lufttrocknerpatrone kann dann die vom Kompressor kommende Druckluft gereinigt und getrocknet werden.

Das entsprechende Rückschlagventil wird anderweitig angeordnet.

Im zweiten Gehäuse können dann die für die Kreisabsicherung erforderlichen Ventile angeordnet sein sowie die für die Lufttrocknereinheit notwendigen Regenerierungseinrichtungen.

Die Lufttrocknereinheit kann somit räumlich getrennt von den anderen Komponenten der Anordnung angeordnet werden und dabei wird nur noch eine Druckluftversorgungsleitung in Form der Verbindungsleitung benötigt.

Die Luftrocknereinheit weist ein Ablassventil auf. Dieses Ablassventil ist insbesondere bei einer Regeneration zweckmäßig, um die zur Regeneration verwendete Luft über das Ablassventil ablassen zu können.

Die Luftrocknereinheit weist weiter eine Leitung zur pneumatischen Ansteuerung des Kompressors auf. Hierdurch kann ein insgesamt einfacherer und ggf. robuster Aufbau der Anordnung erreicht werden.

Weiter wird somit neben der Verbindungsleitung die Steuerleitung verwendet, so dass insgesamt nur zwei externe Leitungen zwischen der Lufttrocknereinheit und der Regelungseinheit liegen müssen.

Über die Steuerleitung wird die Ansteuerung des Ablassventils bewerkstelligt. Das Ablassventil wird beispielsweise im zweiten Betriebszustand für die Regeneration benötigt.

Die Lufttrocknereinheit und die andere Gehäusekomponente, nämlich die Regelungseinheit, können räumlich getrennt voneinander angeordnet werden und sind dann durch zwei externe Druckluftleitungen miteinander verbunden.

Die erste Druckluftleitung kann zur Ansteuerung des Ablassventils in der Lufttrocknereinheit dienen.

Die zweite Druckluftleitung leitet die trockene Luft von hinter der Lufttrocknerpatrone in die wenigstens eine andere Gehäusekomponente.

Falls in dieser Leitung, nämlich der Verbindungsleitung ein Defekt oder Riss auftritt, kann dann hier durch die vorgeschlagene Anordnung das Verbraucherrückschlagventil sicherstellen, dass die Druckluft der verschiedenen Bremskreise nicht über die defekte Leitung entweichen kann.

Somit ermöglicht die erfindungsgemäße Anordnung eine Anordnung des Verbraucherrückschlagventils außerhalb der Lufttrocknereinheit, wobei gleichzeitig eine sichere und räumlich getrennte Verbauung möglich ist, ohne Abstriche bei der Sicherheit machen zu müssen.

Außerdem ist denkbar, dass die Leitung zusätzlich zur pneumatischen Ansteuerung des Kompressors dient. Hierdurch wird eine Funktionsintegration möglich.

Des Weiteren kann vorgesehen sein, dass die Verbindungsleitung eine bloße Verbindungsleitung ohne pneumatische Elemente ist. Hierdurch wird ein besonders einfacher Aufbau der Anordnung insgesamt, aber auch der Lufttrocknereinheit ermöglicht. Insbesondere wird die Verbindung zwischen den Lufttrocknungselementen der Lufttrocknereinheit hin zum Verbraucherrückschlagventil besonders einfach ausgestaltet und es erfolgt auch keine pneumatische Drosselung und es sind auch keine sonstigen Ventile oder pneumatischen Elemente oder dergleichen hier vorgesehen.

Die Verbindungsleitung kann ungedrosselt sein oder kein Drosselelement aufweisen.

Darüber hinaus ist möglich, dass die Verbindungsleitung bis zur Systemgrenze der Lufttrocknereinheit führt und dort an eine weitere Leitung anschließbar ist oder im montierten Zustand der Anordnung an eine weitere Leitung angeschlossen ist. Die Verbindungsleitung kann an Lufttrocknungselemente der Lufttrocknereinheit, wie beispielsweise die Trockenmittelpatrone angeschlossen sein und direkt ohne weitere pneumatische Elemente zur Systemgrenze, d.h. beispielsweise zur Gehäuseaußenwand zu einem dort befindlichen Anschluss führen.

Darüber hinaus kann vorgesehen sein, dass das Verbraucherrückschlagventil in der Regelungseinheit angeordnet ist, das mit der Verbindungsleitung koppelbar oder gekoppelt ist. Hierdurch wird es möglich, das notwendige Verbraucherrückschlagventil in die Regelungseinheit entsprechend zu integrieren, so dass zwischen der Lufttrocknereinheit und der Regelungseinheit lediglich pneumatische Verbindungsleitungen angeordnet werden müssen.

Des Weiteren kann vorgesehen sein, dass in der Regelungseinheit ein weiteres Zusatz-Rückschlagventil vorgesehen ist, das mit der Verbindungsleitung koppelbar oder gekoppelt ist, wobei das Zusatz-Rückschlagventil eine Durchströmung der Verbindungsleitung in einer Richtung ermöglicht, die der zugelassenen Strömungsrichtung des Verbraucherrückschlagventils entgegengesetzt ist. Durch das Zusatz-Rückschlagventil wird eine weitere Absicherung der notwendigen pneumatischen Leitungen für die Regenerierung der Lufttrocknereinheit bereitgestellt.

Des Weiteren kann vorgesehen sein, dass die Verbindungsleitung an eine Leitung anschließbar oder im montierten Zustand der Anordnung an eine Leitung angeschlossen ist, in der ein weiteres Zusatz-Rückschlagventil vorgesehen ist, das mit der Verbindungsleitung koppelbar oder gekoppelt ist, wobei das Zusatz-Rückschlagventil eine Durchströmung der Verbindungsleitung in einer Richtung ermöglicht, die der zugelassenen Strömungsrichtung des Verbraucherrückschlagventils entgegengesetzt ist. Hier können zusätzliche Rückschhlagventile in den Verbindungsleitungen zwischen der Lufttrocknereinheit und der Regelungseinheit vorgesehen sein. Hierdurch können insbesondere zusätzliche Funktionalitäten ermöglicht werden.

Die Verbindungsleitung und die Steuerleitung können als Adapter ausgebildet sind. Denkbar ist insbesondere, dass die Verbindungsleitung und die Steuerleitung zu einem Adapter zusammengefasst sind, der die Lufttrocknereinheit und die Regelungseinheit mit einander im montierten Zustand verbindet.

Des Weiteren kann vorgesehen sein, dass in der Verbindungsleitung eine Steuerleitung integiert und/oder geführt ist. Denkbar ist beispielsweise, hier Zweirohrsysteme oder Mehrschlauchsysteme zur Verwenden. Dadurch wird eine platzsparende Anordnung und Konstruktion ermöglicht. Diese Ausführungsform kann insbesondere in der Form eines Adapters ausgebildet sein.

Denkbar ist in diesem Zusammenhang auch, dass eine derartige Integrierung mehrerer Verbindungsleitungen ineinander auch mit gemeinsamen Steckern einhergeht, so dass die Verbindung der Lufttrocknereinheit mit der Regelungseinheit vergleichsweise wenige Verbindungsstellen aufweist und nur ein einziger Stecker ggf. angeschlossen werden muss.

Die Lufttrocknereinheit kann ein Lufttrocknermodul, insbesondere eine Lufttrocknerkartusche, aufweisen.

Des Weiteren kann vorgesehen sein, dass die Luftrocknereinheit wenigstens ein Ablassventil aufweist.

Das Ablassventil kann beispielsweise durch die zusätzliche Steuerleitung angesteuert werden, die von der Regelungseinheit kommt.

Darüber hinaus kann vorgesehen sein, dass die Luftrocknereinheit wenigstens eine Heizung aufweist. Die Heizungsfunktion kann optional sein und dazu dienen, insbesondere bei kalten Außentemperaturen ein Einfrieren und ein Vereisen der Lufttrocknereinheit zu verhindern. Eine Heizungsfunktion ist aber jedenfalls eine optionale Funktion.

Die Regelungseinheit kann darüber hinaus ein Mehrkreisschutzventil aufweisen.

Außerdem kann vorgesehen sein, dass die Regelungseinheit eine Regenerationseinrichtung zu Regeneration der Lufttrocknereinheit aufweist.

Die Lufttrocknereinheit kann somit insbesondere die Elemente Lufttrocknerpatrone, Ablassventil und optionale Heizug aufweisen, wobei nicht mehr im Vergleich zu bisherigen Lösungen in der Lufttrocknereinheit das Verbraucherrückschlagventil vorgesehen ist.

Die weitere Komponente, hier Regelungseinheit genannt, weist somit beispielsweise das Hauptrückschlagventil, mehrere Ventile zur Kreisabsicherung, wie Überströmventile oder Rückschlagventile vor den einzelnen Kreisen, eine Einrichtung zur Durchführung der Regeneration der Trockenmittelpatrone sowie entsprechende Drucksensoren auf.

Die Lufttrocknereinheit und die Regelungseinheit können räumlich getrennt voneinander angeordnet werden und sodann beispielsweise durch zwei externe Druckluftleitungen miteinander verbunden werden.

Die erste Druckluftleitung dient somit zur Ansteuerung des Ablassventils der Lufttrocknereinheit. Die zweite Druckluftleitung leitet die trockene Luft hinter der Trockenmittelpatrone in die mindestens andere eine Gehäusekomponente, insbesondere hier die Regelungseinheit.

In der Regelungseinheit kann eine pneumatische Steuerungs- und/oder Regelungseinheit vorgesehen sein, die pneumatische Ansteuersignale für die Anstreuerung des Kompressors und/oder des Ablassventils bereitstellt.

Dieses Ansteuersignal kann auch unabhängig vom Systemdruck bereit gestellt werden.

Denkbar ist, dass zur Absicherung der Steuerleitung für die pneumatischen Ansteuersignale für die Anstreuerung des Kompressors und/oder des Ablassventils ein oder mehrere Sicherungsventile oder Rückschlagventile vorgesehen sind.

Durch diese Ausführung ist es auch denkbar, dass der Kompressor und das Ablassventil synchron geschaltet werden.

Das Ablassventil kann dabei beispielsweise über den Systemdruck und/oder einen gesonderten Steuerinput geschaltet werden.

Des Weiteren betrifft die vorliegende Erfindung eine Lufttrocknereinheit für eine Anordnung wie vorstehend beschrieben. Dabei weist die Lufttrocknereinheit nur die strukturellen und/oder funktionalen Merkmale einer Lufttrocknereinheit einer erfindungsgemäßen Anordnung oder der erfindungsgemäßen Ausführungsformen der Anordnung auf.

Außerdem betrifft die vorliegende Erfindung eine Regelungseinheit für eine Anordnung wie vorstehend beschrieben. Dabei weist die Regelungseinheit nur die strukturellen und/oder funktionalen Merkmale einer Regelungseinheit einer erfindungsgemäßen Anordnung oder der erfindungsgemäßen Ausführungsformen der Anordnung auf.

Darüber hinaus betrifft die vorliegende Erfindung einen Adapter für eine Anordnung wie vorstehend beschrieben. Dabei weist der Adapter nur die strukturellen und/oder funktionalen Merkmale eines Adapters für die Verbindung einer Lufttrocknereinheit und einer Regelungseinheit einer erfindungsgemäßen Anordnung oder der erfindungsgemäßen Ausführungsformen der Anordnung auf.

Weitere Einzelheiten und Vorteile der Erfindung sollen nun anhand eines in den Zeichnungen näher dargestellten Ausführungsbeispiels erläutert werden.

Es zeigen :
- Fig. 1: ein erstes Ausführungsbeispiel einer erfindungsgemäßen Anordnung für ein Nutzfahrzeug mit einer Lufttrocknereinheit und einer Regelungseinheit;
- Fig. 2: ein weiteres Ausführungsbeispiel einer erfindungsgemäßen Anordnung; und
- Fig. 3: ein drittes Ausführungsbeispiel einer erfindungsgemäßen Anordnung.

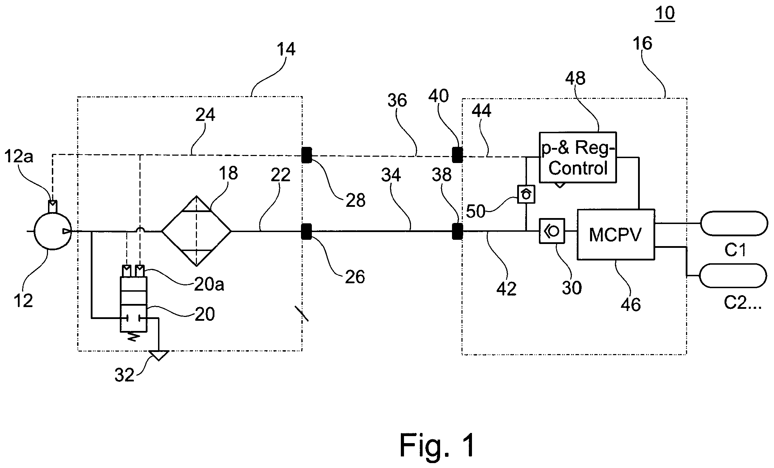

**Fig. 1** zeigt in schematischer Darstellung ein erfindungsgemäße Ausführungsbeispiel einer Anordnung 10 für ein Nutzfahrzeug mit einer Druckluftquelle 12, einer Lufttrocknereinheit 14 und einer Regelungseinheit 16.

Die Lufttrocknereinheit 14 und die Regelungseinheit 16 sind jeweils als gesonderte bauliche Einheiten ausgeführt.

Insbesondere sind beide Einheiten, d.h. die Lufttrocknereinheit 14 und die Regelungseinheit 16 auch als gesonderte und baulich getrennte Einheit in Bezug auf den Kompressor 12 ausgeführt.

Denkbar ist, dass die Lufttrocknereinheit 14 und die Regelungseinheit 16 benachbart angeordnet und befestigt sind. Insbesondere ist hier denkbar, aber nicht zwingend erforderlich, dass die Lufttrocknereinheit 14 und die Regelungseinheit 16 auf einer gemeinsamen Befestigungsplatte oder einem gemeinsamen Befestigungselement befestigt oder angeflanscht sind. Denkbar ist aber auch, dass die Lufttrocknereinheit 14 und die Regelungseinheit 16 jeweils ein gesondertes Befestigungselement oder eine gesonderte Befestigungsplatte oder einen gesonderten Befestigungsflansch aufweisen.

Insbesondere ist die Lufttrocknereinheit 14 insgesamt komplett austauschbar ausgebildet.

Die Lufttrocknereinheit 14 weist weiter eine Lufttrocknerkartusche 18, ein Ablassventil 20, eine Verbindungsleitung 22 und eine Steuerleitung 24 auf.

Die Verbindungsleitung 22 verbindet dabei die Lufttrocknerkartusche 18 mit einem an der Systemgrenze der Lufttrocknereinheit 14, d.h. an der Gehäuseaußenseite der Lufttrocknereinheit 14 vorgesehenem Anschluss 26.

Die Verbindungsleitung 24 ist ebenfalls mit einem am Gehäuse der Lufttrocknereinheit 14 verbundenen Anschluss 28 verbunden.

Die Verbindungsleitung 22 ist als bloße Verbindungsleitung ohne pneumatische Elemente ausgebildet.

Insbesondere verbindet diese Verbindungsleitung 22 die Lufttrocknereinheit 14 direkt und ungedrosselt mit einem außerhalb der Lufttrocknereinheit 14 befindlichen Verbraucherrückschlagventil 30, das im gezeigten Ausführungsbeispiel in der Regelungseinheit 16 angeordnet ist.

Das Verbraucherrückschlagventil 30 dient hier auch als sogenanntes Hauptrückschlagventil für die Lufttrocknereinheit 14.

Die Steuerleitung 24 dient zur Ansteuerung der Druckluftquelle 12 über den Steueranschluss 12a und zur Ansteuerung des Ablassventils 20 über den zugehörigen Steueranschluss 20a des Ablassventils 20.

Das Ablassventil 20 ist dabei als 2/2-Ventil (pneumatisch angesteuert) ausgebildet.

Denkbar ist auch eine Ausführung als 3/2-Ventil.

Im gezeigten Zustand ist das Ablassventil 20 geschlossen und der Ablass 32, der sich an der Systemgrenze der Lufttrocknereinheit 14 befindet, gesperrt.

Insbesondere ist vorgesehen, dass der Ablass 32 an der Gehäuseaußenseite der Lufttrocknereinheit 14 angeordnet ist.

Die Anschlüsse 26 und 28 sind jeweils an weitere Leitungen angeschlossen, wobei der Anschluss 26 mit einer Verbindungsleitung 34 verbunden ist und der Anschluss 28 mit einer Verbindungsleitung 36.

Die Leitung 36 ist dabei mit dem Steueranschluss 12a des Kompressors 12 und mit dem Steueranschluss 20a des Ablassventils 20 verbunden.

Die Regelungseinheit 16 weist an ihrer Systemgrenze Anschlüsse 38 und 40 auf.

Dabei ist der Anschluss 38 mit der Verbindungsleitung 34 verbunden und der Anschluss 40 mit der Verbindungsleitung 36.

Der Anschluss 38 führt im Inneren des Gehäuses der Regelungseinheit 16 zu einer inneren Leitung 42.

Der Anschluss 40 führt zu einer inneren Leitung 44.

Die Regelungseinheit 16 weist in ihrem Inneren, d.h. im Inneren ihres Gehäuses ein Mehrkreisschutzventil 46 und eine (Steuer-)Einheit 48 zur Durchführung der Regeneration der Trockenmittelpatrone auf.

Darüber hinaus ist ein weiteres Rückschlagventil 50 vorgesehen.

Das Verbraucherrückschlagventil 30 ist derart mit der Leitung 42 verbunden, dass von der Lufttrocknereinheit 14 über die Leitungen 22 und 34 ankommende Luft durch das Rückschlagventil 30 hindurchtreten und hindurchströmen kann. Dieser Betriebszustand entspricht dem üblichen Betriebszustand, bei dem eine Druckluftversorgung für weitere Verbraucher C1 und/oder C2 vorgesehen ist und eine Trocknung durch die Lufttrocknereinheit 14 erfolgt.

Für die Regenerierung sperrt das Rückschlagventil 30 und über die Einheit 48 kann Druckluft durch das Rückschlagventil 50 und dann über die Leitungen 42, 34 und 22 « rückwärts » durch die Lufttrocknerpatrone 18 hindurchströmen.

Die Leitung 34 kann somit bi-direktional genutzt werden, nämlich zum Einen für die Druckluftversorgung der Verbraucher (Strömungsrichtung in Fig. 1 von links nach rechts) und zum Anderen zur Regeneration der Lufttrocknereinheit 14 und insbesondere der Lufttrocknerkartusche 18 (Strömungsrichtung in Fig. 1 von rechts nach links).

Das Verbraucherrückschlagventil 30 ist somit in der Regelungseinheit 16 angeordnet ist, das mit der Verbindungsleitung 22 koppelbar ist bzw. hier gekoppelt ist.

Außerdem ist in der Regelungseinheit 16 ein weiteres Zusatz-Rückschlagventil 50 vorgesehen ist, das mit der Verbindungsleitung 22 koppelbar oder gekoppelt ist, wobei das Zusatz-Rückschlagventil 50 eine Durchströmung der Verbindungsleitung 22 in einer Richtung ermöglicht, die der zugelassenen Strömungsrichtung des Verbraucherrückschlagventils 30 entgegengesetzt ist.

In diesem Zusammenhang muss dann auch das Ablassventil 20 über seine pneumatische Ansteuerung 20a entsprechend umgeschaltet werden, so dass der Ablass 32 freigebeben wird. Das entsprechende pneumatische Ansteuersignal wird ebenfalls über die Einheit 48 sowie die Leitungen 24, 36 und 44 bereitgestellt.

Über die Leitung 36 und die in der Lufttrocknereinheit 14 befindliche Leitung 24, die mit dem Steueranschluss 12a des Kompressors 12 verbunden ist, kann der Kompressor 12 entsprechend angesteuert, d.h. eingeschaltet und ausgeschaltet werden.

Die Einheit 48 stellt dafür das entsprechende pneumatische Ansteuersignal bereit.

Dieses Ansteuersignal kann auch unabhängig vom Systemdruck bereit gestellt werden.

Hierzu dient auch in der gezeigten Ausführungsform das Steuerventil 50.

Durch diese Ausführung können der Kompressor 12 und das Ablassventil 20 synchron geschaltet werden.

Das Ablassventil 20 kann dabei beispielsweise über den Systemdruck und/oder einen gesonderten Steuerinput geschaltet werden.

Grundsätzlich ist in diesem Zusammenhang auch denkbar, dass die Verbindung des Steueranschlusses 12a des Kompressors 12 durch eine gesonderte Leitung erfolgt, die auch außerhalb der Lufttrocknereinheit 14 geführt ist.

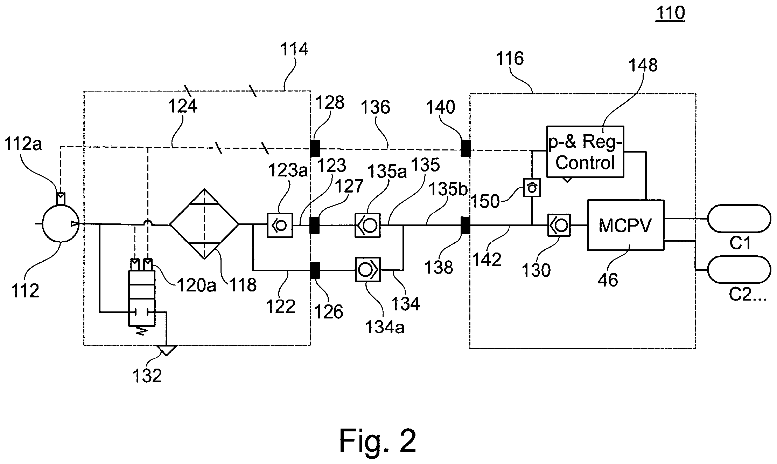

**Fig. 2** zeigt eine Abwandlung der in Fig. 1 gezeigten Ausführungsform der Anordnung 110.

Identische Merkmale sind hier mit um den Wert 100 addierten Werten versehen.

Die in Fig. 2 gezeigte Anordnung 110 weist dabei sämtliche strukturellen und funktionalen Merkmale auf, wie die in Fig 1 gezeigte Anordnung 10.

Es bestehen jedoch die folgenden Unterschiede :
Die in Fig. 2 gezeigte Anordnung 110 weist neben der Leitung 122 eine weitere Leitung 123 mit einem Rückschlagventil 123a auf, das eine Durchströmung von der Trocknerkartusche 118 kommend hin in Richtung der Regelungseinheit 116 zulässt. Die Leitung 123 mündet dabei in einen Anschluss 127. Die Leitung 122 mündet in eine Leitung 134.

In der Leitung 134 ist ein Rückschlagventil 134a angeordnet, das eine Strömung nur von der Regelungseinheit 116 kommend in Richtung Lufttrocknereinheit 114 erlaubt. Die Leitung 135 dient dabei in einem ersten Betriebszustand, d.h. Druckluftversorgung der Verbraucher C1, C2 zur Bereitstellung und Weiterleitung der gereinigten und getrockneten Druckluft.

In der Leitung 135 ist ein zusätzliches (optionales) Rückschlagventil 135a vorgesehen.

Dieses Rückschlagventil 135a ist hier so angeordnet, dass eine Strömung von Druckluft von der Trocknerkartusche 118 kommend hin in Richtung der Regelungseinheit 116 zulässt.

Die Leitung 135 weist einen Leitungsabschnitt 135b auf, der bi-direktional durchströmbar ist und im Wesentlichen eine Zusammenführung der Leitungen 122, 123, 134 und 135 darstellt.

Denkbar ist, dass im Rückschlagventil 123a und/oder 135a ein Im-Kreis-Strömen durch die Leitungen 122, 123 und 134 unterbunden wird. Hier kann beispielsweise eine zusätzliche elektronische Sperre vorgesehen sein.

Die Leitung 134 dient insbesondere zur Regeneration.

Die Verbindungsleitung 122 ist somit im montierten Zustand der Anordnung 110 an die Leitung 134 angeschlossen ist, in der ein weiteres Zusatz-Rückschlagventil 134a vorgesehen ist, das mit der Verbindungsleitung 122 koppelbar oder gekoppelt ist, wobei das Zusatz-Rückschlagventil 134a eine Durchströmung der Verbindungsleitung 122 in einer Richtung ermöglicht, die der zugelassenen Strömungsrichtung des Verbraucherrückschlagventils 130 entgegengesetzt ist.

Bei der in Fig. 2 gezeigten Ausführungsform wäre es auch denkbar, die Rückschlagventile 150 und 130 in der Regelungseinheit 116 vollständig entfallen zu lassen.

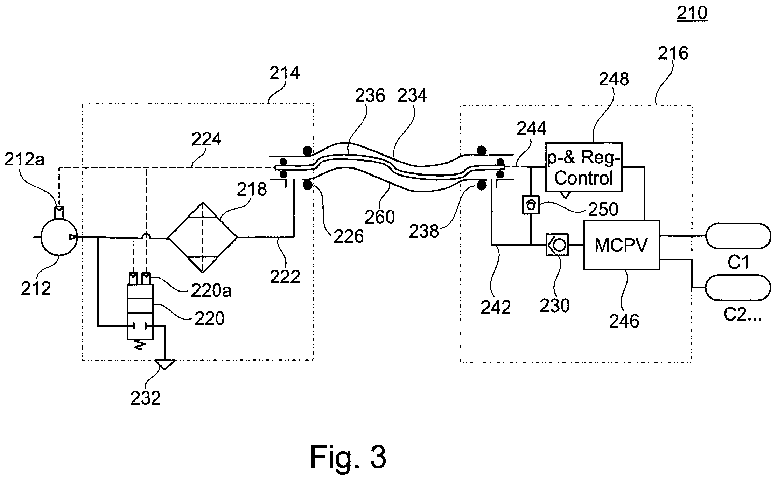

**Fig.** 3 zeigt eine weitere Ausführungsform einer Anordnung 210, die ebenfalls sämtliche funktionalen und strukturellen Merkmale wie die in Fig. 1 gezeigte Anordnung 10 aufweist.

Sämtliche sich entsprechenden Merkmale bzw. Komponenten sind mit identischen Bezugszeichen versehen, wobei die Bezugszeichen jedoch zur besseren Nachvollziehbarkeit und Unterscheidbarkeit um den Wert 200 erhöht sind.

Ein wesentlicher Unterschied besteht hier, dass die Anschlüsse 26 und 28 bzw. 38 und 40 zusammengefasst wurden zu einem gemeinsamen Anschluss 226 bzw. 238. Die Leitung 236 ist dabei in der Leitung 234 geführt.

Somit ist in der Verbindungsleitung 234 eine Steuerleitung 236 integriert.

Die Verbindungsleitung 222 und die Steuerleitung 224 sind als Adapter 260 ausgebildet.

Der Adapter 260 dient zu Verbindung des Anschlusses 226 (gemeinsamer Anschluss für Verbindungsleitung 234 und Steuerleitung 236 an der Lufttrocknereinheit 214) und des Anschlusses 238 (gemeinsamer Anschluss für Verbindungsleitung 234 und Steuerleitung 236 an der Regelungseinheit 216).

### BEZUGSZEICHENLISTE

- 10: Anordnung
- 12: Druckluftquelle
- 12a: Steueranschluss
- 14: Lufttrocknereinheit
- 16: Regelungseinheit
- 18: Lufttrocknerkartusche
- 20: Ablassventil
- 20a: Steueranschluss
- 22: Verbindungsleitung
- 24: Steuerleitung
- 26: Anschluss
- 28: Anschluss
- 30: Verbraucherrückschlagventil
- 32: Ablass
- 34: Verbindungsleitung
- 36: Verbindungsleitung
- 38: Anschluss
- 40: Anschluss
- 42: innere Leitung
- 44: innere Leitung
- 46: Mehrkreisschutzventil
- 48: (Steuer-)Einheit
- 50: Rückschlagventil

- 110: Anordnung
- 112: Druckluftquelle
- 112a: Steueranschluss
- 114: Lufttrocknereinheit
- 116: Regelungseinheit
- 118: Trocknerkartusche
- 120: Ablassventil
- 120a: Steueranschluss
- 122: Leitung
- 123: Leitung
- 123a: Rückschlagventil
- 124: Steuerleitung
- 126: Anschluss
- 127: Anschluss
- 130: Verbraucherrückschlagventil
- 132: Ablass
- 134: Leitung
- 134a: Rückschlagventil
- 135: Leitung
- 135a: Rückschlagventil
- 135b: Leitungsabschnitt
- 136: Verbindungsleitung
- 138: Anschluss
- 140: Anschluss
- 142: innere Leitung
- 144: innere Leitung
- 146: Mehrkreisschutzventil
- 148: (Steuer-)Einheit
- 150: Rückschlagventil

- 210: Anordnung
- 212: Druckluftquelle
- 212a: Steueranschluss
- 214: Lufttrocknereinheit
- 216: Regelungseinheit
- 218: Lufttrocknerkartusche
- 220: Ablassventil
- 220a: Steueranschluss
- 222: Verbindungsleitung
- 224: Steuerleitung
- 226: Anschluss
- 230: Verbraucherrückschlagventil
- 232: Ablass
- 234: Verbindungsleitung
- 36: Verbindungsleitung
- 238: Anschluss
- 242: innere Leitung
- 244: innere Leitung
- 246: Mehrkreisschutzventil
- 248: (Steuer-)Einheit
- 250: Rückschlagventil
- 260: Adapter

- C1: Verbraucher
- C2: Verbraucher

## Patentansprüche

1. Anordnung (10; 110; 210), insbesondere Anordnung (10; 110; 210) für ein Nutzfahrzeug, mit wenigstens einer Lufttrocknereinheit (14; 114; 214) und mit einer Regelungseinheit (16; 116; 216), wobei die Lufttrocknereinheit (14; 114; 214) und die Regelungseinheit (16; 116; 216) jeweils als gesonderte Einheiten ausgebildet sind, wobei die Lufttrocknereinheit (14; 114; 214) wenigstens ein Lufttrocknermodul, insbesondere eine Lufttrocknerkartusche (18; 118; 218), wenigstens ein Ablassventil (20; 120; 220) und wenigstens eine Steuerleitung (24; 124; 224) zur pneumatischen Ansteuerung des Ablassventils (20; 120; 220) aufweist,
**dadurch gekennzeichnet, dass**
in der Lufttrocknereinheit (14; 114; 214) anschließend an das Lufttrocknermodul wenigstens eine Verbindungsleitung (22; 122; 222) vorgesehen ist, die direkt zu einem außerhalb der Lufttrocknereinheit (14; 114; 214) befindlichen Verbraucherrückschlagventil (30; 130; 230) für die Lufttrocknereinheit (14; 114; 214) führt, wobei die Verbindungsleitung (22; 122; 222) zumindest teilweise bi-direktional nutzbar ist und/oder an einen bi-direktional nutzbaren Leitungsabschnitt anschließbar oder angeschlossen ist.

2. Anordnung (10; 110; 210) nach Anspruch 1,
**dadurch gekennzeichnet, dass**
die Steuerleitung (24; 124; 224) zusätzlich zur pneumatischen Ansteuerung eines Kompressors (12; 112; 212) dient.

3. Anordnung (10; 110; 210) nach Anspruch 1 oder Anspruch 2,
**dadurch gekennzeichnet, dass**
die Verbindungsleitung (22; 122; 222) eine bloße Verbindungsleitung (22; 122; 222) ohne pneumatische Elemente ist.

4. Anordnung (10; 110; 210) nach einem der vorhergehenden Ansprüche,
**dadurch gekennzeichnet, dass**
die Verbindungsleitun'g (22; 122; 222) ungedrosselt ist und/oder kein Drosselelement aufweist.

5. Anordnung (10; 110; 210) nach einem der vorhergehenden Ansprüche,
**dadurch gekennzeichnet, dass** t
Verbindungsleitung (22; 122; 222) bis zur Systemgrenze der Lufttrocknereinheit (14; 114; 214) führt und dort an eine weitere Leitung anschließbar ist oder im montierten Zustand der Anordnung (10; 110; 210) an eine weitere Leitung angeschlossen ist.

6. Anordnung (10; 110; 210) nach einem der vorhergehenden Ansprüche, t
**dadurch gekennzeichnet, dass**
das Verbraucherrückschlagventil (30; 130; 230) in der Regelungseinheit (16; 116; 216) angeordnet ist, das mit der Verbindungsleitung (22; 122; 222) koppelbar oder gekoppelt ist.

7. Anordnung (10; 110; 210) nach Anspruch 6,
**dadurch gekennzeichnet, dass**
in der Regelungseinheit (16; 116; 216) ein weiteres Zusatz-Rückschlagventil (50; 150; 250) vorgesehen ist, das mit der Verbindungsleitung (22; 122; 222) koppelbar oder gekoppelt ist, wobei das Zusatz-Rückschlagventil (50; 150; 250) eine Durchströmung der Verbindungsleitung (22; 122; 222) in einer Richtung ermöglicht, die der zugelassenen Strömungsrichtung des Verbraucherrückschlagventils (30; 130; 230) entgegengesetzt ist.

8. Anordnung (110) nach einem der vorhergehenden Ansprüche,
**dadurch gekennzeichnet, dass**
die Verbindungsleitung (122) an eine Leitung anschließbar oder im montierten Zustand der Anordnung (110) an eine Leitung (134) angeschlossen ist, in der ein weiteres Zusatz-Rückschlagventil (134a) vorgesehen ist, wobei die Leitung (134) mit der Verbindungsleitung (122) koppelbar oder gekoppelt ist, wobei das Zusatz-Rückschlagventil (134a) eine Durchströmung der Verbindungsleitung (122) in einer Richtung ermöglicht, die der zugelassenen Strömungsrichtung des Verbraucherrückschlagventils (130) entgegengesetzt ist.

9. Anordnung (210) nach einem der vorhergehenden Ansprüche,
**dadurch gekennzeichnet, dass**
die Verbindungsleitung (222) und die Steuerleitung (224) als Adapter (260) ausgebildet sind und/oder dass in der Verbindungsleitung (222) eine Steuerleitung (224) integriert und/oder geführt ist.

10. Anordnung (10; 110; 210) nach einem der vorhergehenden Ansprüche,
**dadurch gekennzeichnet, dass**
die Lufttrocknereinheit (14; 114; 214) wenigstens eine Heizung aufweist.

11. Anordnung (10; 110; 210) nach einem der vorhergehenden Ansprüche,
**dadurch gekennzeichnet, dass**
die Regelungseinheit (16; 116; 216) ein Mehrkreisschutzventil (46; 146; 246) aufweist.

12. Anordnung (10; 110; 210) nach einem der vorhergehenden Ansprüche,
**dadurch gekennzeichnet, dass**
die Regelungseinheit (16; 116; 216) eine Regenerationseinrichtung zu Regeneration der Lufttrocknereinheit (14; 114; 214) aufweist.

13. Lufttrocknereinheit (14; 114; 214) für eine Anordnung (10; 110; 210) nach einem der vorhergehenden Ansprüche.

## Claims

1. An arrangement (10; 110; 210), in particular an arrangement (10; 110; 210) for a utility vehicle, having at least one air dryer unit (14; 114; 214) and having a regulating unit (16; 116; 216), this air dryer unit (14; 114; 214) and this regulating unit (16; 116; 216) each being configured as separate units, the air dryer unit (14; 114; 214) having at least one air dryer module, in particular an air dryer cartridge (18; 118; 218), at least one discharge valve (20; 120; 220) and at least one control line (24; 124; 224) for pneumatically controlling the discharge valve (20; 120; 220), **characterised in that**
provided in the air dryer unit (14; 114; 214) and connecting to the air dryer module is at least one connecting line (22; 122; 222) that leads directly to a consumer non-return valve (30; 130; 230) for the air dryer unit (14; 114; 214) that is located outside the air dryer unit (14; 114; 214), this connecting line (22; 122; 222) being usable at least partially bi-directionally and/or being connectable or connected to a bi-directionally usable portion of the line.

2. An arrangement (10; 110; 210) according to claim 1,
**characterised in that**
the control line (24; 124; 224) additionally serves to pneumatically control a compressor (12; 112; 212).

3. An arrangement (10; 110; 210) according to claim 1 or claim 2,
**characterised in that**
the connecting line (22; 122; 222) is merely a connecting line (22; 122; 222) and has no pneumatic elements.

4. An arrangement (10; 110; 210) according to any one of the preceding claims, **characterised in that**
the connecting line (22; 122; 222) is unthrottled and/or has no throttle element.

5. An arrangement (10; 110; 210) according to any one of the preceding claims, **characterised in that**
the connecting line (22; 122; 222) runs to the system boundary of the air dryer unit (14; 114; 214), where it can be connected to a further line or, when the arrangement (10; 110; 210) is fitted, is connected to a further line.

6. An arrangement (10; 110; 210) according to any one of the preceding claims, **characterised in that**
the consumer non-return valve (30; 130; 230), which is couplable or coupled to the connecting line (22; 122; 222), is arranged in the regulating unit (16; 116; 216).

7. An arrangement (10; 110; 210) according to claim 6,
**characterised in that,**
also arranged in the regulating unit (16; 116; 216) is a further additional non-return valve (50; 150; 250) that is couplable or coupled to the connecting line (22; 122; 222), this additional non-return valve (50; 150; 250) allowing a flow to pass through the connecting line (22; 122; 222) in a direction that is contrary to the permitted flow direction of the consumer non-return valve (30; 130; 230).

8. An arrangement (110) according to any one of the preceding claims,
**characterised in that**
the connecting line (122) can be connected to a line or, when the arrangement (110) is fitted, is connected to a line (134) in which a further additional non-return valve (134a) is provided, this line (134) being couplable or coupled to the connecting line (122), the additional non-return valve (134a) allowing a flow to pass through the connecting line (122) in a direction that is contrary to the permitted flow direction of the consumer non-return valve (130).

9. An arrangement (210) according to any one of the preceding claims,
**characterised in that**
the connecting line (222) and the control line (224) are configured as adapters (260), and/or a control line (224) is integrated and/or runs through the connecting line (222).

10. An arrangement (10; 110; 210) according to any one of the preceding claims, **characterised in that**
the air dryer unit (14; 114; 214) has at least one heater.

11. An arrangement (10; 110; 210) according to any one of the preceding claims, **characterised in that**
the regulating unit (16; 116; 216) has a multi-circuit protection valve (46; 146; 246).

12. An arrangement (10; 110; 210) according to any one of the preceding claims, **characterised in that**
the regulating unit (16; 116; 216) has a regeneration device for regenerating the air dryer unit (14; 114; 214).

13. A regulating unit (16; 116; 216) for an arrangement (10; 110; 210) according to any one of the preceding claims.

## Revendications

1. Dispositif (10 ; 110 ; 210), en particulier (10 ; 110 ; 210) pour un véhicule utilitaire, comprenant au moins une unité (14 ; 114 ; 214) de déshydratation de l'air et comprenant une unité (16 ; 116 ; 216) de régulation, dans lequel l'unité (14 ; 114 ; 214) de déshydratation de l'air et l'unité (16 ; 116 ; 216) de régulation sont constituées respectivement sous la forme d'unités distinctes, dans lequel l'unité (14 ; 114 ; 214) de déshydratation de l'air a au moins un module de déshydratation de l'air, en particulier une cartouche (18 ; 118 ; 218) de déshydratation de l'air, au moins une soupape (20 ; 120 ; 220) d'évacuation et au moins un conduit (24 ; 124 ; 224) de commande pour la commande pneumatique de la soupape (20 ; 120 ; 220) d'évacuation,
**caractérisé en ce que**
dans l'unité (14 ; 114 ; 214) de déshydratation de l'air, il est prévu, à la suite du module de déshydratation de l'air, au moins un conduit (22 ; 122 ; 222) de communication, qui conduit directement à un clapet (30 ; 130 ; 230) antiretour de consommateur, se trouvant à l'extérieur de l'unité (14 ; 114 ; 214) de déshydratation de l'air, pour l'unité (14 ; 114 ; 214) de déshydratation de l'air, dans lequel le conduit (22 ; 122 ; 222) de communication peut être utilisé au moins en partie bi directionnellement et/ou est raccordé à un tronçon de conduit pouvant être utilisé bi directionnellement ou peut l'être.

2. Dispositif (10 ; 110 ; 210) suivant la revendication 1, **caractérisé en ce que**
le conduit (24 ; 124 ; 224) de commande sert, en outre, à la commande pneumatique d'un compresseur (12 ; 112 ; 212).

3. Dispositif (10 ; 110 ; 210) suivant la revendication 1 ou la revendication 2,
**caractérisé en ce que**
le conduit (22 ; 122 ; 222) de communication est un simple conduit (22 ; 122 ; 222) de communication sans élément pneumatique.

4. Dispositif (10 ; 110 ; 210) suivant l'une des revendications précédentes,
**caractérisé en ce que**
le conduit (22 ; 122 ; 222) de communication n'est pas étranglé ou n'a pas d'élément d'étranglement.

5. Dispositif (10 ; 110 ; 210) suivant l'une des revendications précédentes,
**caractérisé en ce que**
le conduit (22 ; 122 ; 222) de communication mène jusqu'à la limite de système de l'unité (14 ; 114 ; 214) de déshydratation de l'air et peut y être raccordé à un autre conduit ou est, à l'état monté du dispositif (10 ; 110 ; 210), raccordé à un autre conduit.

6. Dispositif (10 ; 110 ; 210) suivant l'une des revendications précédentes,
**caractérisé en ce que**
le clapet (30 ; 130 ; 230) antiretour de consommateur est monté dans l'unité (16 ; 116 ; 216) de régulation, qui est relié au conduit (22 ; 122 ; 222) de communication ou peut l'être.

7. Dispositif (10 ; 110 ; 210) suivant la revendication 6, **caractérisé en ce qu'**il est prévu
dans l'unité (16 ; 116 ; 216) de régulation a un autre clapet (50 ; 150 ; 250) antiretour supplémentaire, qui est relié au conduit (22 ; 122 ; 222) de communication ou peut l'être, dans lequel, le clapet (50 ; 150 ; 250) antiretour supplémentaire rend possible que le conduit (22 ; 122 ; 222) de communication soit parcouru dans un sens qui est contraire au sens d'écoulement autorisé par le clapet (30 ; 130 ; 230) antiretour du consommateur.

8. Dispositif (110) suivant l'une des revendications précédentes,
**caractérisé en ce que**
le conduit (122) de communication peut être raccordé à un conduit ou, à l'état monté du dispositif (110), raccordé à un conduit (134) dans lequel est prévu un autre clapet (134a) antiretour supplémentaire, dans lequel le conduit (134) communique ou peut communiquer avec le conduit (122) de communication, dans lequel le clapet (134a) antiretour supplémentaire rend possible un passage dans le conduit (122) de communication dans un sens, qui est contraire au sens d'écoulement autorisé par le clapet (130) antiretour du consommateur.

9. Dispositif (210) suivant l'une des revendications précédentes,
**caractérisé en ce que**
le conduit (222) de communication et le conduit (224) de commande sont constitués en adaptateur (260) et/ou **en ce qu'**un conduit (224) de commande est intégré et/ou passe dans le conduit (222) de communication.

10. Dispositif (10 ; 110 ; 210) suivant l'une des revendications précédentes,
**caractérisé en ce que**
l'unité (14 ; 114 ; 214) de déshydratation d'air comporte au moins un chauffage.

11. Dispositif (10 ; 110 ; 210) suivant l'une des revendications précédentes,
**caractérisé en ce que**
l'unité (16 ; 116 ; 216) de régulation à une soupape (46 ; 146 ; 246) de protection à plusieurs circuits.

12. Dispositif (10 ; 110 ; 210) suivant l'une des revendications précédentes,
**caractérisé en ce que**
l'unité (16 ; 116 ; 216) de régulation comporte un dispositif de régénération pour la régénération de l'unité (14 ; 114 ; 214) de déshydratation de l'air.

13. Unité (14 ; 114 ; 214) de déshydratation de l'air pour un dispositif (10 ; 110 ; 210) suivant l'une des revendications précédentes.
